# EUROPÄISCHE PATENTSCHRIFT

(11) **EP 2 899 920 B1**
(45) Veröffentlichungstag und Bekanntmachung des Hinweises auf die Patenterteilung: **06.09.2017**
(21) Anmeldenummer: 14152432.2
(22) Anmeldetag: 24.01.2014
(51) Int. Cl.: H04L 12/26, H04L 29/06

(54) **System und Verfahren zur Filterung und Speicherung von Daten**
System and method for filtering and storing data
Système et procédé de filtration et de stockage de données

(43) Veröffentlichungstag der Anmeldung: 29.07.2015
(73) Patentinhaber: Deutsche Telekom AG, 53113 Bonn (DE)
(72) Erfinder: KRAFT, Andreas, 14129 Berlin (DE); HELMUT, Vivien, 12309 Berlin (DE); GORGAS, Dagmar, 13629 Berlin (DE); SINNING, Thorsten, 52080 Aachen (DE)
(74) Vertreter: Vossius & Partner Patentanwälte Rechtsanwälte mbB

(56) Entgegenhaltungen:
- US-A1- 2010 157 802
- US-A1- 2011 078 572

## Beschreibung

Die vorliegende Erfindung betrifft ein System und ein Verfahren zur Filterung und Speicherung von Daten. Das System weist dabei eine Filterkomponente, eine Filtermanagement-Vorrichtung und eine Speichereinheit auf.

Datenhaltung im Bereich der Haushaltsautomatisierung und Körpersensorik umfasst im Allgemeinen den Umgang mit sensiblen personenbezogenen Daten. Mit dem anhaltenden Trend, diese Daten nicht ausschließlich lokal auf einem Gerät zu verarbeiten, sondern diese zur Verarbeitung in eine Rechnerwolke, eine sogenannte Cloud, zu übertragen und damit dem Einfluss des Nutzers zu entziehen, besteht die Gefahr unerwünschter Nebeneffekte für den Nutzer. So können beispielsweise die Daten für den Nutzer unerkannt verändert werden oder die Daten können ohne dessen Einverständnis weiter verarbeitet oder weitergereicht werden. Die Daten können weiterhin einer eingeschränkten Exportierung in andere Datenformate unterliegen. Des Weiteren können bei der Kündigung der Datenverarbeitungsdienstleistung beispielsweise die Daten von Betreiberseite gelöscht werden.

EP 1 006 701 A2 betrifft ein Verfahren für den Betrieb eines Datenfilters, wobei eine Sicherheitsrichtlinie implementiert ist, bei der die Datenpakete durch sequentielles Bewerten einer Vielzahl von geordneten Regeln gefiltert werden. Das Verfahren weist dabei den Schritt des dynamischen Verwaltens von Matchdaten während des Betriebs des Datenfilters auf, wobei die Matchdaten angeben, wie oft ein Datenpaket mit einer jeden der besagten Regeln übereinstimmt. Die geordneten Regeln werden entsprechend neu geordnet, so dass Regeln bei denen öfter eine Übereinstimmung erreicht wird früher bewertet werden.

Die US 2010/0157802 A1 betrifft ein Verfahren zur Datenfilterung bei der verschiedene Ebenen an Transparenz bei der Filterung berücksichtigt werden.

Die US 2011/0078572 A1 betrifft Systeme und Verfahren zur Analyse von "clickstream" Daten den Konsum von Medieninhalten betreffend.

Der Erfindung liegt die Aufgabe zugrunde, ein System und ein Verfahren zur Filterung und Speicherung von Daten bereitzustellen.

Diese Aufgabe wird mit den Merkmalen der unabhängigen Patentansprüche gelöst. Abhängige Ansprüche betreffen erfindungsgemäße, bevorzugte Ausführungsformen.

Die Erfindung geht von dem Grundgedanken aus, dass bei der Übermittlung von sensiblen, beispielsweise personenbenzogenen Daten von einem privaten Bereich an ein entsprechendes sich im Netz befindliches Back-End die Daten mittels einer Filterkomponente gefiltert werden können, ohne dass die entsprechenden Filterregeln vorher bekannt sein müssen. Somit können diese Filterregeln auch nachträglich auf die Dateninhalte angewendet werden. Beispielsweise können die Dateninhalte in einem Speicher abgelegt werden und anschließend mittels besagter Filterkomponente analysiert und strukturiert werden und dann gegebenenfalls an das Back-End gesandt werden. Ferner ist es ein Grundgedanke der vorliegenden Erfindung, dass die besagte Filterkomponente zusammen mit einem Filtermanager, der Konfigurationsdaten über Datenströme und Datentstrukturen an den Filter bzw. eine Filterkomponente weiter gibt, sowie in dem Speicher zum Speichern der Daten eine logische Einheit bilden.

Die Erfindung betrifft ein System zur Filterung und Speicherung von Daten mit: einer Filterkomponente; einer Filtermanagement-Vorrichtung; und einer Speichereinheit, wobei die Filterkomponente geeignet ist, Daten von einer Datenerzeugevorrichtung zu empfangen und Konfigurationsdaten bezüglich mindestens eines Datenstroms und/oder mindestens einer Datenstruktur der empfangenen Daten von der Filtermanagement-Vorrichtung zu empfangen, und mindestens einen Teil der empfangenen Daten an die Speichereinheit zu senden und unter Verwendung von Konfigurationsdaten mindestens einen Teil der empfangenen Daten an ein Back-End zu senden.

Konfigurationsdaten können eine Parametrisierung der verschiedenen Komponenten zur Erkennung und Verarbeitung von Daten, z.B. eine Beschreibung von Datenstrukturen aufweisen und/oder darstellen. Konfigurationsdaten können geeignet sein, die Ent- und Verschlüsselung von Daten zu beeinflussen, und/oder geeignet sein, die Art und/oder die Anwendung bzw. Anbringung von Metadaten zu bestimmen.

Die Datenerzeugevorrichtung kann ein Sensor und/oder ein Endgerät sein. Das Endgerät kann beispielsweise ein Personal Computer, ein Smartphone, ein Tablet und/oder ein mobiles Kommunikationsgerät sein. Das Endgerät kann mindestens einen Sensor und eine Programmanwendung aufweisen, wobei die Programmanwendung geeignet ist durch den Sensor erfasste Daten entsprechend zu verarbeiten und/oder Daten selbstständig zu generieren und/oder selbstständig zu erfassen und entsprechend zu verarbeiten. Auch kann das Endgerät und/oder der Sensor eine Einrichtung aufweisen, die geeignet ist, die Daten an die Filterkomponente zu übermitteln. Der Filter kann eine entsprechende Einrichtung aufweisen, die geeignet ist, die von dem Filter aufgenommenen Daten an die Filterkomponente zu übermitteln. Der Sensor kann mit einem Endgerät verbunden sein und das Endgerät geeignet sein die Daten entsprechend an die Filterkomponente zu übermitteln. Der Sensor kann beispielsweise an dem Körper des Nutzers angebracht sein. So kann der Sensor ein Sensorarmband und/oder eine Sensoruhr sein. Auch kann der Sensor ein vernetzbarer Aktivitätszähler sein. Der Sensor kann geeignet sein, Aktvitäts- und/oder Vitaldaten des Nutzers aufzunehmen.

Die Datenerzeugevorrichtung kann auch eine Programmanwendung sein, die geeignet ist Daten zu generieren und/oder zu erfassen. Auch kann sich die Datenerzeugevorrichtung auf einem Home-Gateway befinden.

Die Daten können eine Datenstruktur aufweisen und Teil eines Datenstroms sein. Die Daten können Daten aus dem Bereich der Haushaltsautomatisierung, der Körpersensorik und/oder des Nutzungsverhaltens verschiedener elektronischer Geräte sein. Die Daten können Informationen über das Internetnutzungsverhalten, über das TV-Nutzungsverhalten und/oder über die Nutzung von Haushaltsgeräten, z.B. vernetzter Waschmaschinen aufweisen. Die Daten können von der Datenerzeugevorrichtung automatisiert weitergesendet werden, durch Benutzerabfrage und/oder durch das Auslösen einer entsprechenden Funktion der Datenerzeugevorrichtung.

Die Filtermanagement-Vorrichtung kann geeignet sein, Konfigurationsdaten bezüglich mindestens eines Datenstroms und/oder mindestens einer Datenstruktur der empfangenen Daten an die Filterkomponente zu übermitteln.

Ein Back-End kann beispielsweise ein auf einem Server laufendes Programm, vorzugsweise eine Client-Server-Anwendung, sein. Auch kann ein Back-End eine Datenbank und/oder ein Server als solches sein.

Gemäß einer erfindungsgemäßen Ausführungsform ist bzw. sind die Filterkomponente und/oder die Speichereinheit und/oder eine Hilfsvorrichtung geeignet, die empfangenen Daten zu analysieren und zu bestimmen, mit welcher Datenerzeugevorrichtung und/oder welcher auf der Datenerzeugevorrichtung ausgeführten Anwendung die empfangenen Daten erzeugt und/oder bearbeitet wurden.

Auch kann/können die Filterkomponente und/oder die Speichereinheit und/oder die Hilfsvorrichtung geeignet sein, aufgrund der Analyse der empfangenen Daten und der Bestimmung, mit welcher Datenerzeugevorrichtung und/oder welcher auf der Datenerzeugevorrichtung ausgeführten Anwendung die empfangenen Daten erzeugt und/oder bearbeitet wurden, entsprechende Typinformationen zu generieren. Die Typinformationen können Informationen über das Dateiformat der empfangenen Daten und/oder Informationen über die Dateierzeugevorrichtung, die die Daten generiert hat enthalten. Auch können die Typinformationen Informationen über den Ort der Generierung der Dateien und/oder den Zeitpunkt der Generierung enthalten. Diese Typinformationen können an die Filtermanagement-Vorrichtung gesendet werden. Die Filtermanagement-Vorrichtung kann dazu geeignet sein, aufgrund der übermittelten Typinformationen entsprechende Konfigurationsdaten zu erstellen. Die Konfigurationsdaten können Informationen darüber enthalten, welche Filterregeln auf die entsprechenden Daten anzuwenden sind. So können die Filterregeln die Information beinhalten, welcher Teil der Daten an das Back-End übermittelt werden soll, welche Daten und/oder welcher Teil der Daten in dem Speicher gespeichert werden sollen, welcher Teil der Daten anonymisiert werden soll, welcher Teil der Daten in ein anderes Dateiformat formatiert werden soll und/oder welcher Teil der Daten von dem Back-End an weitere Back-Ends und/oder Dienste weitergeleitet werden können. Auch kann der Nutzer bestimmte Regeln für die Filterregeln erstellen. So kann der Nutzer regeln, ob und wie umfangreich seine Daten anonymisiert werden. Generell kann gemäß einer Ausführungsform der Nutzer alle Filterregeln selbst erstellen und/oder modifizieren.

Die Hilfsvorrichtung kann die Analyse und/oder die Konvertierung von Datenströmen und/oder Datenstrukturen und/oder Daten ausführen, vorzugsweise wenn die Filterkomponente und/oder die Speichereinheit nicht genügend Rechenkapazität aufweist. So können sich auf der Hilfsvorrichtung Formatbeschreibung und/oder Algorhithmen zur Konvertierung bekannter Datenformaten befinden. Diese Formatbeschreibung und/oder Algorhithmen zur Konvertierung bekannter Datenformate können auch bei Bedarf durch die Speichereinheit und/oder die Filterkomponente abgerufen werden. Auch kann die Konvertierung des Datenformates der Daten auf der Hilfsvorrichtung erfolgen. Dies kann vorzugsweise dann erfolgen, wenn für die Konvertierung des Datenformats der Daten ein lizenzierungspflichtiges und/oder ein rechenintensives Verfahren eingesetzt wird. Die Hilfsvorrichtung kann in einem Teil des Internets, der Cloud oder eines Weitverkehrsnetzes zur Verfügung gestellt sein.

Gemäß einer weiteren erfindungsgemäßen Ausführungsform ist die Filterkomponente geeignet, anhand der Analyse entsprechende Konfigurationsdaten von der Filtermanagement-Vorrichtung anzufordern und die Filtermanagement-Vorrichtung ist geeignet, die angeforderten Konfigurationsdaten an die Filterkomponente zu senden.

Gemäß einer weiteren erfindungsgemäßen Ausführungsform ist die Filtermanagement-Vorrichtung geeignet, bei mindestens einer Veränderung mindestens einer Datenstruktur oder mindestens einer Übertragungsart der von der Filterkomponente empfangenen Daten und/oder einem Wechsel der Datenerzeugevorrichtung und/oder einem Wechsel der auf der Datenerzeugevorrichtung ausgeführten Anwendung vorbestimmte Konfigurationsdateien an die Filterkomponente zu senden.

Gemäß einer weiteren erfindungsgemäßen Ausführungsform ist bzw. sind die Filterkomponente und/oder die Speichereinheit und/oder die Hilfsvorrichtung geeignet, die empfangenen Daten in ein vorbestimmtes Dateiformat zu konvertieren.

Generell können Datenformate sich über die Zeit ändern und/oder unter Umständen auch inkompatibel zueinander werden. Die Filterkomponente und/oder die Speichereinheit und/oder die Hilfsvorrichtung kann bzw. können geeignet sein, die empfangenen Daten unterschiedlicher Versionen eines Dateiformats zu erkennen, zu speichern und/oder zu konvertieren.

Die Filterkomponente kann auch bei einer Erkennung der Dateiversion in den Metadaten die erkannte Version des Datenformats ablegen.

Gemäß einer weiteren erfindungsgemäßen Ausführungsform erfolgt die Konvertierung unbekannter Formate und/oder Dateistrukturen der empfangenen Daten anhand mindestens eines heuristischen Verfahrens.

Gemäß einer weiteren erfindungsgemäßen Ausführungsform beruht das mindestens eine heuristische Verfahren vorzugsweise auf der Bayes-Klassifikation und/oder Stream-Clustering-Algorithmen.

Gemäß einer weiteren erfindungsgemäßen Ausführungsform ist die Speichereinheit geeignet, die von der Datenerzeugevorrichtung empfangenen Daten strukturiert und/oder verschlüsselt unter Verwendung von Konfigurationsdaten zu speichern.

Gemäß einer weiteren erfindungsgemäßen Ausführungsform ist die Filterkomponente in einem Home-Gateway integriert. Die Speichereinheit kann auch in dem Home-Gateway integriert sein oder mit einem an dem Home-Gateway angeschlossenen lokalen Netzwerk verbunden sein. Die Filtermanagement-Vorrichtung kann auch in dem Home-Gateway integriert sein oder sich in einem Weitverkehrsnetz und/oder in dem Internet und/oder in einer Rechnerwolke befinden.

Ein Home-Gateway, auch Residantial Gateway genannt, kann technische Einrichtungen aufweisen, um Signale aus dem Betreiber-/Zugangsnetz empfangen zu können und Signale an das Betreiber-/Zugangsnetz senden zu können. Dabei kann bei dem Betreiber-/Zugangsnetz beispielsweise der Standard Digital Subscriber Line (DSL) oder ein passives optisches Netz (PON) zum Einsatz kommen. Das Home-Gateway kann darüber hinaus auch Einrichtungen aufweisen, um die empfangenen Signale in ein geeignetes Format zu übersetzen, damit die Signale in einem Heimnetz weiter genutzt und verarbeitet werden können. Ein solches Format kann beispielsweise Eternet sein.

Die Rechnerwolke, auch als Cloud bezeichnet, kann abstrahierte Informationstechnologie, Infrastrukturen, wie beispielsweise Rechenkapazität, Datenspeicher und/oder Netzwerkkapazität aufweisen, die sich dynamisch an den Bedarf anpassen und dem Nutzer über ein Netzwerk zur Verfügung stellen.

Gemäß einer weiteren erfindungsgemäßen Ausführungsform ist die Filterkomponente geeignet, den mindestens einen Teil der empfangenen Daten zu einem ersten Zeitpunkt T1 an die Speichereinheit zu senden und den mindestens einen Teil der empfangenen Daten unter Verwendung von Konfigurationsdaten zu einem zweiten Zeitpunkt T2 an das Back-End zu senden.

Die zeitliche Differenz zwischen den Zeitpunkten T1 und T2 ist vorzugsweise mindestens mehrere zehntel Sekunden lang, weiter bevorzugt mehrere Sekunden, höchst bevorzugt mehrere Minuten.

Gemäß einer weiteren erfindungsgemäßen Ausführungsform werden die von der Datenerzeugevorrichtung empfangenen Daten in der Speichereinheit mit Metadaten versehen.

Die Metadaten können mindestens eines der folgenden Merkmale aufweisen: Datum und Zeitpunkt der Erzeugung und/oder Datenübertragung durch die Filterkomponente, Geo-Positionsdaten, IP und/oder MAC-Adressen der Datenerzeugevorrichtung, eindeutige Identifikationsinformationen der Datenerzeugevorrichtung, der Versionsinformationen der Datenerzeugevorrichtung, und verschiedene Versionen der Datenstrukturen.

Die Erfindung betrifft auch ein Verfahren zur Filterung und Speicherung von Daten mit den Schritten: Empfangen von Daten von einer Datenerzeugevorrichtung in einer Filterkomponente; Empfangen von Konfigurationsdaten bezüglich mindestens eines Datenstroms und/oder mindestens einer Datenstruktur der empfangenen Daten von einer Filtermanagement-Vorrichtung in der Filterkomponente, Senden mindestens eines Teil der empfangenen Daten von der Filterkomponente an die Speichereinheit; und Senden mindestens eines Teil der empfangenen Daten von der Filterkomponente an ein Backend unter Verwendung von Konfigurationsdaten.

Gemäß einer weiteren erfindungsgemäßen Ausführungsform weist das Verfahren auch den Schritt auf: Analysieren und Bestimmen unter Verwendung der Filterkomponente und/oder der Speichereinheit und/oder einer Hilfsvorrichtung mit welcher Datenerzeugevorrichtung und/oder welcher auf der Datenerzeugevorrichtung ausgeführten Anwendung die empfangenen Daten erzeugt und/oder bearbeitet wurden.

Gemäß einer weiteren erfindungsgemäßen Ausführungsform weist das Verfahren auch die Schritte auf: Anfordern der anhand der Analyse entsprechenden Konfigurationsdaten von der Filtermanagement-Vorrichtung durch die Filterkomponente und Senden der angeforderten Konfigurationsdaten von der Filtermanagement-Vorrichtung an die Filterkomponente.

Gemäß einer weiteren erfindungsgemäßen Ausführungsform weist das Verfahren auch den Schritt auf: Senden vorbestimmter Konfigurationsdateien von der Filtermanagement-Vorrichtung an die Filterkomponente bei mindestens einer Veränderung mindestens einer Datenstruktur oder mindestens einer Übertragungsart der von der Filterkomponente empfangenen Daten und/oder einem Wechsel der Datenerzeugevorrichtung und/oder einem Wechsel der auf der Datenerzeugevorrichtung ausgeführten Anwendung.

Gemäß einer weiteren erfindungsgemäßen Ausführungsform weist das Verfahren auch den Schritt auf: Konvertieren der empfangenen Daten in ein vorbestimmtes Dateiformat durch die Filterkomponente und/oder die Speichereinheit und/oder die Hilfsvorrichtung.

Gemäß einer weiteren erfindungsgemäßen Ausführungsform weist das Verfahren auch den Schritt auf: Strukturiertes und/oder verschlüsseltes Speichern der von der Datenerzeugevorrichtung empfangenen Daten in der Speichereinheit unter Verwendung von Konfigurationsdaten.

Gemäß einer weiteren erfindungsgemäßen Ausführungsform weist das Verfahren auch den Schritt auf: Versehen der von der Datenerzeugevorrichtung empfangenen Daten in der Speichereinheit mit Metadaten.

Die Erfindung betrifft ferner ein Verfahren, bei dem Daten zwischengespeichert werden, um zu einem späteren Zeitpunkt eine Analyse bzw. eine Konvertierung zur weiteren Nutzung dieser Daten durchzuführen. Diese Analyse bzw. Konvertierung kann durchgeführt werden, vor allem falls die Datenstruktur der zu analysierenden Daten erst später bekannt wird. Des Weiteren können mit der vorliegenden Erfindung die empfangenen Daten über einen langen Zeitraum ausgewertet werden und/oder es können spätere Auswertungen zu einem späteren Zeitpunkt mit zu dem Zeitpunkt der Entstehung der Daten noch unbekannten, verbesserten Analysealgorhithmen durchgeführt werden. Des Weiteren kann der Inhaber der Daten mit Hilfe der vorliegenden Erfindung passende Ankaufsangebote für die Daten auswählen, zum Beispiel von Datenverwertern für Studien und/oder Marktforschungsinstituten.

Gemäß der vorliegenden Erfindung können Daten gefiltert und/oder gespeichert werden, die durch Geräte in dem Heimnetz eines Nutzers anfallen, zum Beispiel durch Geräte und/oder Sensoren, die entweder direkt mit einer Anwendung bei dem Nutzer verbunden sind und/oder an einen Dienstanbieter im Internet/Weitverkehrsnetz zur weiteren Verarbeitung und/oder Speicherung weitergeleitet werden. Die vorliegende Erfindung ermöglicht es auch, dass Daten, die in einem proprietären Format formatiert sind, auch ohne Kenntnis des Nutzers über die Beschaffenheit des proprietären Formats mittels der Filterkomponente in ein anderes Datenformat transformiert werden können.

Auch können mit der vorliegenden Erfindung Daten zur späteren Verwendung durch den Nutzer bzw. durch einen Dienstanbieter gespeichert werden. Dies kann beispielsweise geschehen, wenn bei Erfassung der Daten noch keine Anwendung durch den Nutzer ausgewählt wurde und/oder wenn ein Wechsel des Dienstanbieters geschehen soll und die Daten von einem Dienstanbieter nicht an den anderen Dienstanbieter übergeben werden. Des Weiteren können die von der Filtermanagementvorrichtung übermittelten Konfigurationsdaten von dem Benutzer/Inhaber der Daten vorbestimmt werden. Der Nutzer kann somit entscheiden, welche Anwendung eines Endgerätes und/oder welcher Sensor des Heimnetzes Daten an einen Dienstanbieter übertragen kann.

Mit Hilfe der vorliegenden Erfindung können Statistiken aus Verbrauchsdaten und/oder Gebrauchsdaten von Geräten, zum Beispiel das Fernsehverhalten generiert werden, die zuerst beim Inhaber der Daten verbleiben. Der Inhaber der Daten kann anschließend über seine Daten selbstbestimmt verfügen. So kann der Inhaber die Daten für weitere Anwendungen durch die vorliegende Erfindung konvertieren und/oder verkaufen. Des Weiteren kann mit Hilfe der gefilterten und an das Back-End übermittelten Daten eine Gamifizierung des Nutzerverhaltens erreicht werden. Als Gamifizierung bezeichnet man in diesem Zusammenhang die Anwendung spieltypischer Elemente und Prozesse. So kann der Nutzer beispielsweise durch den Vergleich seiner Bewegungsaktivität mit der Bewegungsaktivität anderer Nutzer des Systems zu mehr körperlicher Bewegung und Aktivität motiviert werden. Des Weiteren kann durch die Gamifizierung der Lernerfolg des Benutzers des Systems in einem bestimmten Bereich gesteigert werden.

Mit der vorliegenden Erfindung wird eine Trennung von Daten mit Personenbezug und/oder datenschutzrelevante Daten von datenschutzirrelevanten Daten und/oder Daten ohne Personenbezug erreicht.

Die Erfindung wird nachstehend anhand von Bespielen und der Zeichnung näher erläutert. Es zeigen:
- Fig. 1a - 1d: schematische Darstellungen eines System zur Filterung und Speicherung von Daten gemäß bevorzugter Ausfühurngsformen der Erfindung,
- Fig. 2: eine schematische Darstellung eines System zur Filterung und Speicherung von Daten gemäß einer weiteren bevorzugten Ausführungsform der Erfindung, und
- Fig. 3: eine schematische Darstellung eines Systems zur Filterung und Speicherung von Daten gemäß einer weiteren bevorzugten Ausführungsform der Erfindung.

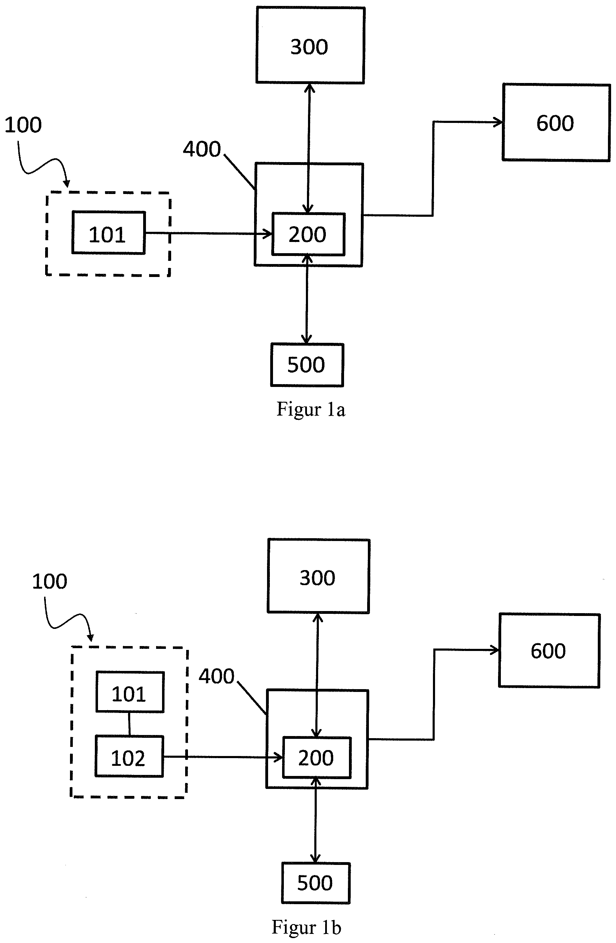

Fig. 1a zeigt eine schematische Darstellung eines Systems zur Filterung und Speicherung von Daten gemäß einer bevorzugten Ausführungsform der Erfindung. Die Datenerzeugevorrichtung 100 umfasst in dem gezeigten Ausführungsbeispiel einen Sensor 101, der beispielsweise das TV-Nutzungsverhalten des Nutzers in seinem Wohnraum aufzeichnet. Die erzeugten Daten werden an die Filterkomponente 200 gesendet.

Die Filterkomponente 200 befindet sich in der vorliegenden Ausführungsform in einem Home-Gateway 400, welches ein Heimnetz errichtet und den Knotenpunkt zum Internet bzw. zu einem Weitverkehrsnetz bildet. Die Filterkomponente 200 analysiert den empfangenen Datenstrom und gegebenenfalls auch die Datenstruktur der empfangenen Daten. Aus den so gewonnenen Informationen generiert die Filterkomponente 200 entsprechenden Typinformationen, beispielsweise das Dateiformat der empfangenen Daten und Informationen über die Dateierzeugevorrichtung 100, die die empfangenen Daten übermittelt hat. Diese Typinformationen werden anschließend an die Filtermanagement-Vorrichtung 300 übermittelt.

Die Filtermanagement-Vorrichtung 300 analysiert die Typinformationen und erstellt entsprechende Filterregeln für die Filter-Vorrichtung 200. In dem vorliegendem Fall speichert die Filterkomponente 200 gemäß einer von der Filter-Management-Vorrichtung 300 gesendeten Filterregel alle empfangenen Daten in dem Speicher 500 in einem bestimmten Dateiformat ab. Der Speicher 500 befindet sich in der vorliegenden Ausführungsform als netzgebundener Speicher in dem Heimnetz. Gemäß einer weiteren an die Filter-Vorrichtung 200 gesendeten Filterregel, werden die Daten vor dem Senden an ein Backend 600 anonymisiert. Des Weiteren werden nur die Daten an das Backend 600 versandt, die während einer bestimmten Tageszeit, beispielsweise Mittags, von der Datenerzeugevorrichtung aufgenommen und generiert wurden.

Das Backend 600 befindet sich beispielhaft in einer Rechnerwolke im Internet und wird beispielhaft von einem Marktforschungsinstitut betrieben. Der Nutzer behält durch die beschreibene Filterung Kontrolle über seine Daten und bestimmt welche Daten und in welchem Maße diese versandt werden, z.B. ob und wie umfangreich die Anonymisierung der Daten erfolgen soll.

Fig. 1b zeigt eine schematische Darstellung eines Systems zur Filterung und Speicherung von Daten gemäß einer weiteren bevorzugten Ausführungsform der Erfindung. Die in Fig. 1b gezeigte bevorzugte Ausführungsform unterscheidet sich von der in Fig. 1a gezeigten bevorzugten Ausführungsform, dass die Datenerzeugevorrichtung 100 einen Sensor 101 und ein Endgerät 102 aufweist. Das Endgerät 102 in der vorliegenden Ausführungsform ein mobiles Kommunikationsgerät, beispielsweise ein Smartphone. Der Sensor 101 ist beispielhaft ein Bewegungssensor, der an dem Körper des Nutzers befestigt ist und dessen Schritte zählt. Durch eine Kommunikationsschnittstelle ist der Sensor 101 mit dem Endgerät 102 verbunden. Ist das Engerät in Reichweite des von dem Home-Gateway 400 errichteten Heimnetzes, übermittelt es die von dem Sensor 101 empfangenen Daten an die Filterkomponente 200. Die Filterkomponente 200 erstellt den empfangenen Daten entsprechende Typinformationen und übermittelt diese an die Filtermanagement-Vorrichtung 300. Die Filtermanagement-Vorrichtung 300 übermittelt entsprechende Filterregeln an die Filterkomponente 200. Die Filterkomponente 200 konvertiert gemäß einer Filterregel alle empfangenen Daten in ein bestimmtes Dateiformat und speichert die Daten in dem Speicher 500 in dem bestimmten Dateiformat ab. An das Backend 600 sendet die Filterkomponente 200 gemäß einer entsprechenden Filterregel nur die tagesweise gemittelten Datenwerte. Zusätzlich werden die Daten gemäße einer Filterregel durch Verwendung eines Alias-Namen anonymisiert. Die Daten werden vor dem Versand an das Backend 600 ebenfalls in ein bestimmtes Dateiformat konvertiert. Das Dateiformat kann dabei dasselbe wie für die Speicherung im Speicher 500 oder ein anderes sein.

Das Backend 600 wird beispielsweise von einem Unternehmen betrieben, welches sich auf Bewegungsmotivation spezialisiert hat. Aufgrund der von der Datenerzeugevorrichtung 100 erzeugten und übermittelten Daten kann beispielsweise mit Hilfe spieltypsicher Elemente, sogenannter Gamifizierung, der Nutzer zu noch mehr Bewegung animiert werden.

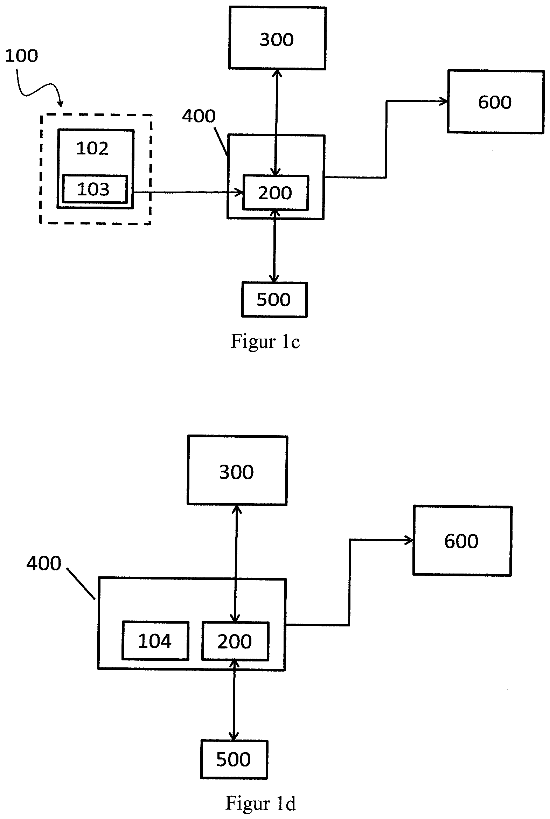

Fig. 1c zeigt eine schematische Darstellung eines Systems zur Filterung und Speicherung von Daten gemäß einer weiteren bevorzugten Ausführungsform der Erfindung. Die in Fig. 1c gezeigte bevorzugte Ausführungsform unterscheidet sich dadurch, dass die Datenerzeugvorrichtung 100 ein Endgerät 102 und eine sich auf dem Endgerät befindliche Programmanwendung 103 aufweist. Die Programmanwendung 103 erfasst ausführungsgemäß den Netzverkehr, der von dem Endgerät 102 empfangen und versandt wird. Die von der Programmanwendung 103 so erzeugten Daten werden an die Filterkomponente 200 über das Endgerät 102 gesendet. Bei der Programmanwendung 103 kann es sich um eine Komponente handeln, die sowohl Daten selbstständig erfassen, beispielsweise von dem Endgerät 102, aus Metadaten ermitteln kann, z.B. die zeitliche Abfolge von Daten, und/oder auch Benutzereingaben erfassen kann. Die Filterkomponente 200 erstellt entsprechende Typinformationen, die u.a. Informationen über die Programmanwendung 103 und das Endgerät 102 aufweisen. Die Typinformationen werden wie in den vorher beschriebenen bevorzugten Ausführungsformen an die Filtermanagement-Vorrichtung 300 gesendet. Die Filtermanagement-Vorrichtung 300 sendet entsprechende Filterregeln an die Filterkomponente 200. Gemäß einer Filterregel speichert die Filterkomponente alle empfangenen Daten komprimiert in dem Speicher 500 ab. Gemäß einer weiteren Filterregel extrahiert die Filterkomponente 200 die Informationen über den Gesamtnetzverkehr aus den Daten bzw. dem Datenstrom und sendet nur diese Information in einem bestimmten Dateiformat an das Backend 600. Das Backend 600 wird in der bevorzugten Ausführungsform von einem Netzbetreiber betrieben, der auf diese Weise Informationen über das Nutzungsverhalten von Engeräten in Heimnetzen sammelt und auswertet.

Fig. 1d zeigt eine schematische Darstellung eines Systems zur Filterung und Speicherung von Daten gemäß einer weiteren bevorzugten Ausführungsform der Erfindung. Die in Fig. 1d gezeigte bevorzugte Ausführungsform unterscheidet sich dadurch, dass die Datenerzeugvorrichtung 100 eine Programmanwendung 104 aufweist, die auf dem Home-Gateway 400 ausgeführt wird. Die Programmanwendung 104 erfasst zeitabhängig die Anzahl der in dem von dem Home-Gateway 400 errichteten Heimnetz angemeldeten Endgeräte. Die von der Programmanwendung 104 erzeugten Daten werden an die Filterkomponente 200 . Die Filterkomponente 200 erstellt entsprechende Typinformationen, die u.a. Informationen über die Programmanwendung 104 aufweisen. Die Typinformationen werden wie in den vorher beschriebenen bevorzugten Ausführungsformen an die Filtermanagement-Vorrichtung 300 gesendet. Die Filtermanagement-Vorrichtung 300 sendet entsprechende Filterregeln an die Filterkomponente 200. Gemäß einer Filterregel speichert die Filterkomponente Zusammenfassungen aller empfangenen Daten in dem Speicher 500 ab. Gemäß einer weiteren Filterregel sendet die Filterkomponente 200 die Informationen über die Anzahl der in dem Heimnetz angemeldeten Endgeräte in einem bestimmten Dateiformat an das Backend 600. Das Backend 600 wird auch in dieser bevorzugten Ausführungsform von einem Netzbetreiber betrieben, der auf diese Weise Informationen über das Nutzungsverhalten von Engeräten in Heimnetzen sammelt und auswertet.

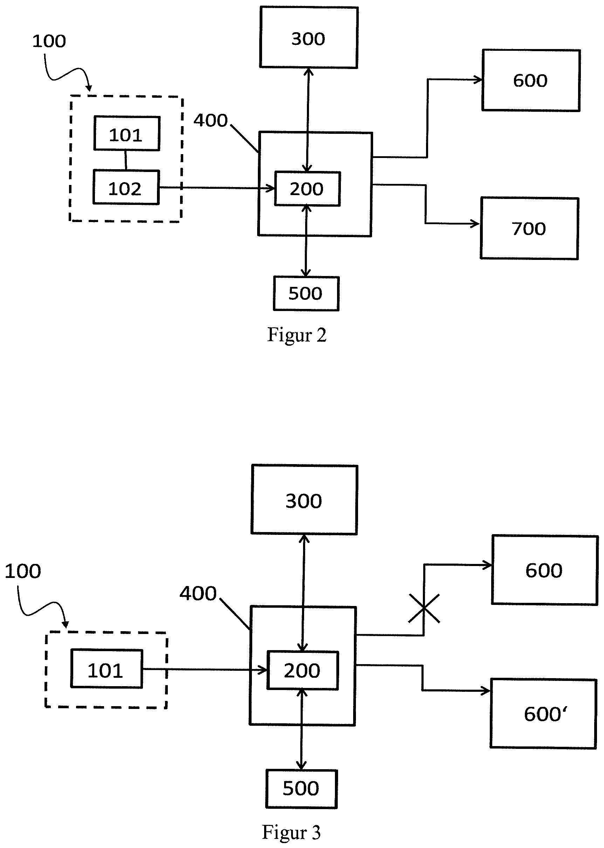

Fig. 2 zeigt eine schematische Darstellung eines Systems zur Filterung und Speicherung von Daten gemäß einer weiteren bevorzugten Ausführungsform der Erfindung. Der Aufbau unterscheidet sich von dem in Fig. 1b gezeigten dadurch, dass die Analyse der von der Datenerzeugevorrichtung 100 empfangenen Daten und die Konvertierung in andere Dateiformate nicht in der Filterkomponente 200, sondern in einer zusätzlichen sich in dem Weitverkehrsnetz bzw. in dem Internet befindlichen Hilfsvorrichtung 700 durchgeführt werden. In der vorliegenden bevorzugten Ausführungsform ist das gewünschte Dateiformat, in das die von der Datenerzeugevorrichtung 100 empfangenen Daten konvertiert werden soll, lizenzierungspflichtig. Die Filterkomponente 200 sendet die zu konvertierenden Daten an die Hilfsvorrichtung 700. Dort werden die Daten konvertiert und anschließend an die Filterkomponente 200 zurückgesendet. Anschließend werden die Daten den Filterregeln entsprechend in dem Speicher 500 gespeichert und/oder an das Backend 600 gesendet.

Fig. 3 zeigt eine schematische Darstellung eines Systems zur Filterung und Speicherung von Daten gemäß einer weiteren bevorzugten Ausführungsform der Erfindung. Die in Fig. 3 gezeigte Ausführungsform unterscheidet sich durch die in Fig. 1a gezeigte Ausführungsform dadurch, dass der Nutzer seine Daten nicht mehr an das Backend 600 senden möchte. Dies kann beispielsweise dadurch motiviert sein, dass der Nutzer mit dem Betreiber des Backend 600 keine Vertragsbeziehungen mehr unterhält und stattdessen Vertragsbeziehungen des Betreibers eines Backend 600' eingehen möchte. Allerdings findet gemäß der vorliegenden Ausführungsform zwischen dem Backend 600 und dem Backend 600' kein Datenaustausch statt. So kann die Filterkomponente 200 die in dem Speicher 500 gespeicherten Daten aufrufen, durch eine von der Filtermanagement 300 übermittelte Filterregel in das von dem Backend 600' benötigte Dateiformat konvertieren und anschließend an das Backend 600' übermitteln. Auch kann die Filtermanagement die von der Datenerzeugevorrichtung 100 empfangenen Daten mittels besagter Filterregel in das von dem Backend 600' benötigte Dateiformat konvertieren und anschließend an das Backend 600' übermitteln. Dadurch können bereits vorhandenen Daten einerseits zu dem neuen Backend 600' migriert werden und andererseits die zukünftig generierten Daten an das Backend 600' gesendet werden.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang und den Geist der folgenden Ansprüche zu verlassen. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschließlich die in den Ansprüchen beziehungsweise in den Ausführungsbeispielen beschriebenen Merkmale umfasst sowie auch solche, die zusätzliche andere Merkmale umfassen.

## Patentansprüche

1. System zur Filterung und Speicherung von Daten mit:
einer Filterkomponente;
einer Filtermanagement-Vorrichtung; und
einer Speichereinheit,
wobei die Filterkomponente geeignet ist, Daten von einer Datenerzeugevorrichtung zu empfangen und Konfigurationsdaten bezüglich mindestens eines Datenstroms und/oder mindestens einer Datenstruktur der empfangenen Daten von der Filtermanagement-Vorrichtung zu empfangen, und mindestens einen Teil der empfangenen Daten an die Speichereinheit zu senden, und
unter Verwendung von Konfigurationsdaten mindestens einen Teil der empfangenen Daten an ein Backend zu senden,
wobei die Filtermanagement-Vorrichtung geeignet ist, bei mindestens einer Veränderung mindestens einer Datenstruktur oder mindestens einer Übertragungsart der von der Filterkomponente empfangenen Daten und/oder einem Wechsel der Datenerzeugevorrichtung und/oder einem Wechsel der auf der Datenerzeugevorrichtung ausgeführten Anwendung vorbestimmte Konfigurationsdateien an die Filterkomponente zu senden.

2. System nach Anspruch 1, wobei die Filterkomponente und/oder die Speichereinheit und/oder eine Hilfsvorrichtung geeignet ist bzw. sind, die empfangenen Daten zu analysieren und zu bestimmen, mit welcher Datenerzeugevorrichtung und/oder welcher auf der Datenerzeugevorrichtung ausgeführten Anwendung die empfangenen Daten erzeugt und/oder bearbeitet wurden.

3. System nach Anspruch 2, wobei die Filterkomponente geeignet ist, anhand der Analyse entsprechende Konfigurationsdaten von der Filtermanagement-Vorrichtung anzufordern und wobei die Filtermanagement-Vorrichtung geeignet ist, die angeforderten Konfigurationsdaten an die Filterkomponente zu senden.

4. System nach einem der Ansprüche 1 bis 3, wobei die Filterkomponente und/oder die Speichereinheit und/oder die Hilfsvorrichtung geeignet ist bzw. sind, die empfangenen Daten in ein vorbestimmtes Dateiformat zu konvertieren.

5. System nach Anspruch 4, wobei die Konvertierung unbekannter Formate und/oder Dateistrukturen der empfangenen Daten anhand mindestens eines heuristischen Verfahrens erfolgt und wobei vorzugsweise das mindestens eine heuristische Verfahren auf der Bayes-Klassifikation und/oder Stream-Clustering-Algorithmen beruht.

6. System nach einem der Ansprüche 1 bis 5, wobei die Speichereinheit geeignet ist, die von der Datenerzeugevorrichtung empfangenen Daten strukturiert und/oder verschlüsselt unter Verwendung von Konfigurationsdaten zu speichern.

7. System nach einem der Ansprüche 1 bis 6, wobei die Filterkomponente in einem Home-Gateway integriert ist
und/oder
wobei die Speichereinheit in dem Home-Gateway integriert ist oder mit einem an dem Home-Gateway angeschlossenen lokalen Netzwerk verbunden ist und/oder
wobei die Filtermanagement-Vorrichtung in dem Home-Gateway integriert ist oder sich in einem Weitverkehrsnetz und/oder in dem Internet und/oder in einer Rechnerwolke befindet.

8. System nach einem der Ansprüche 1 bis 7, wobei die Filterkomponente geeignet ist, den mindestens einen Teil der empfangenen Daten zu einem ersten Zeitpunkt T₁ an die Speichereinheit zu senden und den mindestens einen Teil der empfangenen Daten unter Verwendung von Konfigurationsdaten zu einem zweiten Zeitpunkt T₂ an das Backend zu senden.

9. System nach einem der Ansprüche 1 bis 8, wobei die von der Datenerzeugevorrichtung empfangenen Daten in der Speichereinheit mit Metadaten versehen werden.

10. Verfahren zur Filterung und Speicherung von Daten mit den Schritten:
Empfangen von Daten von einer Datenerzeugevorrichtung in einer Filterkomponente;
Empfangen von Konfigurationsdaten bezüglich mindestens eines Datenstroms und/oder mindestens einer Datenstruktur der empfangenen Daten von einer Filtermanagement-Vorrichtung in der Filterkomponente,
Senden mindestens eines Teils der empfangenen Daten von der Filterkomponente an die Speichereinheit; und
Senden mindestens eines Teils der empfangenen Daten von der Filterkomponente an ein Backend unter Verwendung von Konfigurationsdaten, ferner mit dem Schritt:
Senden vorbestimmter Konfigurationsdateien von der Filtermanagement-Vorrichtung an die Filterkomponente bei mindestens einer Veränderung mindestens einer Datenstruktur oder mindestens einer Übertragungsart der von der Filterkomponente empfangenen Daten und/oder einem Wechsel der Datenerzeugevorrichtung und/oder einem Wechsel der auf der Datenerzeugevorrichtung ausgeführten Anwendung.

11. Verfahren nach Anspruch 10, ferner mit dem Schritt:
Analysieren und Bestimmen unter Verwendung der Filterkomponente und/oder der Speichereinheit und/oder einer Hilfsvorrichtung mit welcher Datenerzeugevorrichtung und/oder welcher auf der Datenerzeugevorrichtung ausgeführten Anwendung die empfangenen Daten erzeugt und/oder bearbeitet wurden.

12. Verfahren nach Anspruch 11, ferner mit den Schritten:
Anfordern der anhand der Analyse entsprechenden Konfigurationsdaten von der Filtermanagement-Vorrichtung durch die Filterkomponente und Senden der angeforderten Konfigurationsdaten von der Filtermanagement-Vorrichtung an die Filterkomponente.

13. Verfahren nach einem der Ansprüche 10 bis 12, ferner mit dem Schritt:
Konvertieren der empfangenen Daten in ein vorbestimmtes Dateiformat durch die Filterkomponente und/oder die Speichereinheit und/oder die Hilfsvorrichtung.

14. Verfahren nach Anspruch 13, wobei die Konvertierung unbekannter Formate und/oder Dateistrukturen der empfangenen Daten anhand mindestens eines heuristischen Verfahrens erfolgt und wobei vorzugsweise das mindestens eine heuristische Verfahren auf der Bayes-Klassifikation und/oder Stream-Clustering-Algorithmen beruht.

15. Verfahren nach Anspruch 14, ferner mit dem Schritt:
Strukturiertes und/oder verschlüsseltes Speichern der von der Datenerzeugevorrichtung empfangenen Daten in der Speichereinheit unter Verwendung von Konfigurationsdaten.

16. Verfahren nach einem der Ansprüche 10 bis 15, ferner mit dem Schritt:
Versehen der von der Datenerzeugevorrichtung empfangenen Daten in der Speichereinheit mit Metadaten.

17. Verfahren nach einem der Ansprüche 10 bis 16, wobei die Filterkomponente den mindestens einen Teil der empfangenen Daten zu einem ersten Zeitpunkt T₁ an die Speichereinheit sendet und den mindestens einen Teil der empfangenen Daten unter Verwendung von Konfigurationsdaten zu einem zweiten Zeitpunkt T₂ an das Backend sendet.

## Claims

1. System for filtering and storing data comprising:
a filtering component;
a filter management device; and
a storing unit,
wherein the filtering component is adapted to receive data from a data generating device and to receive configuration data regarding at least one data stream and/or at least one data structure of the received data from the filter management device, and to send at least part of the received data to the storing unit, and
to send at least a part of the received data to a backend by using configuration data,
wherein the filter management device is adapted to send predetermined configuration files to the filtering component upon at least a change of at least one data structure or at least one transmission method of the data received by the filtering component and/or a change of the data generating device and/or a change of the application run on the data generating device.

2. System according to claim 1, wherein the filtering component and/or the storing unit and/or an auxiliary device is or are adapted to analyze the received data and to decide by which data generating device and/or which application performed on the data generating device the received data have been generated and/or edited.

3. System according to claim 2, wherein the filtering component is adapted to request, based on the analysis, respective configuration data from the filter management device and wherein the filter management device is adapted to send the requested configuration data to the filtering component.

4. System according to any one of claims 1 to 3, wherein the filtering component and/or the storing unit and/or the auxiliary device is or are adapted to convert the received data into a predetermined file format.

5. System according to claim 4, wherein the conversion of unknown formats and/or file structures of the received data is performed based on at least one heuristic method and wherein the at least one heuristic method is preferably based on the Bayes classification and/or stream clustering algorithms.

6. System according to any one of claims 1 to 5, wherein the storing unit is adapted to store the data received from the data generating means in structured and/or encoded form by using configuration data.

7. System according to any one of claims 1 to 6, wherein the filtering component is integrated in a home gateway
and/or
wherein the storing unit is integrated in the home gateway or is connected to a local network which is connected to the home gateway
and/or
wherein the filter management device is integrated in the home gateway or is located in a wide-area network and/or in the internet and/or in a cloud.

8. System according to any one of claims 1 to 7, wherein the filtering component is adapted to send the at least one part of the received data at a first point in time T₁ to the storing unit and to send the at least one part of the received data to the backend at a second point in time T₂ by using configuration data.

9. System according to any one of claims 1 to 8, wherein the data received from the data generating means are provided with meta data in the storing unit.

10. Method for filtering and storing data comprising the steps:
receiving data from a data generating device in a filtering component;
receiving configuration data regarding at least one data stream and/or at least one data structure of the received data by a filter management device in the filtering component;
sending at least one part of the received data from the filtering component to the storing unit; and
sending at least one part of the received data from the filtering component to a backend by using configuration data, further comprising the step:
sending predetermined configuration files from the filter management device to the filtering component upon at least a change of at least one data structure or at least a transmission method of data received by the filtering component and/or a change of the data generating device and/or a change of the application run on the data generating device.

11. Method according to claim 10, further comprising the step:
analyzing and determining, by using the filtering component and/or the storing unit and/or an auxiliary device, with which data generating means and/or by which application run on the data generating means the received data were generated and/or edited.

12. Method according to claim 11, further comprising the steps:
requesting, by the filtering component, the respective configuration data based on the analysis from the filter management device and sending the requested configuration data from the filter management device to the filtering component.

13. Method according to any one of claims 10 to 12, further comprising the step:
converting the received data into a predetermined file format by the filtering component and/or the storing unit and/or the auxiliary device.

14. Method according to claim 13, wherein the conversion of unknown formats and/or file structures of the received data is performed based on at least one heuristic method and wherein the one heuristic method is preferably based on the Bayes classification and/or stream clustering algorithms.

15. Method according to claim 14, further comprising the step:
structural and/or encoded storing of the data received from the data generating device in the storing unit by using configuration data.

16. Method according to any one of claims 10 to 15, further comprising the step:
providing the data received from the data generating device with meta data in the storing unit.

17. Method according to any one of claims 10 to 16, wherein the filtering component sends the at least one part of the received data at a first point in time T₁ to the storing unit and sends the at least one part of the received data to the backend at a second point in time T₂ by using configuration data.

## Revendications

1. Système de filtrage et de stockage de données avec :
un composant de filtrage ;
un dispositif de gestion de filtre ; et
une unité de stockage,
dans lequel le composant de filtrage est approprié pour recevoir des données d'un dispositif de génération de données et pour recevoir des données de configuration, concernant au moins un flux de données et/ou au moins une structure de données des données reçues, du dispositif de gestion de filtre et pour envoyer au moins une partie des données reçues à l'unité de stockage et,
en utilisant des données de configuration, pour envoyer au moins une partie des données reçues à un dispositif en arrière-plan,
dans lequel le dispositif de gestion de filtre est approprié pour, lors d'au moins une modification d'au moins une structure de données ou d'au moins un type de transmission des données reçues par le composant de filtrage et/ou lors d'un remplacement du dispositif de génération de données et/ou lors d'un remplacement de l'application exécutée sur le dispositif de génération de données, envoyer des fichiers de configuration prédéterminés au composant de filtrage.

2. Système selon la revendication 1, dans lequel le composant de filtrage et/ou l'unité de stockage et/ou un dispositif auxiliaire est ou sont appropriés pour analyser les données reçues et pour déterminer le dispositif de génération de données et/ou l'application exécutée sur le dispositif de génération de données avec lequel et/ou avec laquelle les données reçues ont été générées et/ou traitées.

3. Système selon la revendication 2, dans lequel le composant de filtrage est approprié pour demander, à l'aide de l'analyse, des données de configuration correspondantes du dispositif de gestion de filtre et dans lequel le dispositif de gestion de filtre est approprié pour envoyer les données de configuration demandées au composant de filtrage.

4. Système selon l'une quelconque des revendications 1 à 3, dans lequel le composant de filtrage et/ou l'unité de stockage et/ou le dispositif auxiliaire est ou sont appropriés pour convertir les données reçues en un format de fichier prédéterminé.

5. Système selon la revendication 4, dans lequel la conversion de formats inconnus et/ou de structures de fichiers inconnues des données reçues est effectuée à l'aide d'au moins un procédé heuristique et dans lequel, de préférence, l'au moins un procédé heuristique repose sur la classification de Bayes et/ou sur des algorithmes de regroupement de flux.

6. Système selon l'une quelconque des revendications 1 à 5, dans lequel l'unité de stockage est appropriée pour stocker les données reçues du dispositif de génération de données d'une manière structurée et/ou chiffrée en utilisant les données de configuration.

7. Système selon l'une quelconque des revendications 1 à 6, dans lequel le composant de filtrage est intégré dans une passerelle résidentielle
et/ou
dans lequel l'unité de stockage est intégrée dans la passerelle résidentielle ou est reliée à un réseau local raccordé à la passerelle résidentielle
et/ou
dans lequel le dispositif de gestion de filtre est intégré dans la passerelle résidentielle ou se trouve dans un réseau étendu et/ou dans l'Internet et/ou dans un nuage informatique.

8. Système selon l'une quelconque des revendications 1 à 7, dans lequel le composant de filtrage est approprié pour envoyer l'au moins une partie des données reçues à un premier instant T₁ à l'unité de stockage et à envoyer l'au moins une partie des données reçues en utilisant les données de configuration à un second instant T₂ au dispositif en arrière-plan.

9. Système selon l'une quelconque des revendications 1 à 8, dans lequel les données reçues du dispositif de génération de données sont dotées, dans l'unité de stockage, de métadonnées.

10. Procédé de filtrage et de stockage de données avec les étapes de :
réception de données d'un dispositif de génération de données dans un composant de filtrage ;
réception de données de configuration, concernant au moins un flux de données et/ou au moins une structure de données des données reçues, d'un dispositif de gestion de filtre dans le composant de filtrage,
envoi d'au moins une partie des données reçues par le composant de filtrage à l'unité de stockage ; et
envoi d'au moins une partie des données reçues par le composant de filtrage à un dispositif en arrière-plan en utilisant les données de configuration, avec en plus l'étape de :
envoi de fichiers de configuration prédéterminés par le dispositif de gestion de filtre au composant de filtrage lors d'au moins une modification d'au moins une structure de données ou d'au moins un type de transmission des données reçues par le composant de filtrage et/ou lors d'un remplacement du dispositif de génération de données et/ou lors d'un remplacement de l'application exécutée sur le dispositif de génération de données.

11. Procédé selon la revendication 10, avec en plus l'étape de :
analyse et détermination, en utilisant le composant de filtrage et/ou l'unité de stockage et/ou un dispositif auxiliaire, du dispositif de génération de données et/ou de l'application exécutée sur le dispositif de génération de données avec lequel et/ou avec laquelle les données reçues ont été générées et/ou traitées.

12. Procédé selon la revendication 11, avec en plus les étapes de :
demande des données de configuration, correspondantes à l'aide de l'analyse, du dispositif de gestion de filtre par le composant de filtrage et envoi des données de configuration demandées du dispositif de gestion de filtre au composant de filtrage.

13. Procédé selon l'une quelconque des revendications 10 à 12, avec en plus l'étape de :
conversion des données, reçues dans un format de fichier prédéterminé, par le composant de filtrage et/ou par l'unité de stockage et/ou par le dispositif auxiliaire.

14. Procédé selon la revendication 13, dans lequel la conversion de formats inconnus et/ou de structures de fichiers inconnues des données reçues est effectuée à l'aide d'au moins un procédé heuristique et dans lequel, de préférence, l'au moins un procédé heuristique repose sur la classification de Bayes et/ou sur des algorithmes de regroupement de flux.

15. Procédé selon la revendication 14, avec en plus l'étape de :
stockage structuré et/ou chiffré des données reçues par le dispositif de génération de données dans l'unité de stockage en utilisant les données de configuration.

16. Procédé selon l'une quelconque des revendications 10 à 15, avec en plus l'étape consistant à :
doter de métadonnées les données reçues par le dispositif de génération de données dans l'unité de stockage.

17. Procédé selon l'une quelconque des revendications précédentes 10 à 16, dans lequel le composant de filtrage envoie l'au moins une partie des données reçues à un premier instant T₁ à l'unité de stockage et l'au moins une partie des données reçues en utilisant les données de configuration à un second instant T₂ au dispositif en arrière-plan.
